# EUROPEAN PATENT APPLICATION

(11) **EP 3 547 035 A1**
(43) Date of publication of application: **02.10.2019**
(21) Application number: 19164908.6
(22) Date of filing: 25.03.2019
(51) Int. Cl.: G03G 15/20, G03G 21/20

(54) **IMAGE FORMING APPARATUS AND IMAGE FORMING METHOD**

(30) Priority: 26.03.2018 JP 2018058590
(71) Applicant: Kabushiki Kaisha Toshiba, Minato-ku Tokyo 105-8001 (JP); Toshiba Tec Kabushiki Kaisha, 141-8562 Tokyo (JP)
(72) Inventor: YUGE, Keiji, Shinagawa-ku, Tokyo 141-8562 (JP)
(74) Representative: Fédit-Loriot

(57) **Abstract**

According to an embodiment, an image forming apparatus includes a case that houses an image forming device and a fixing device, a first fan provided in the case, and a controller. The first fan generates a first airflow flowing in a predetermined direction in the case. The controller controls a heating temperature of the fixing device and a rotation speed of the first fan corresponding to an operation mode of the image forming apparatus.

## Description

### FIELD

The present invention relates to the field of an image forming technology in general, and embodiments described herein relate in particular to an image forming apparatus and an image forming method.

### BACKGROUND

Image forming apparatuses that form images using toner generate fine dust harmful to human bodies. Although there are many opinions about a generating factor of dust, it is known that dust is generated at the time of image formation. Accordingly, the image forming apparatus in the related art includes an exhaust duct that collects dust and a fan that generates an airflow flowing dust to an exhaust duct. The image forming apparatus in the related art has inhibited dust from emitting outside the image forming apparatus by rotating the fan at the time of the image formation. However, in recent years, it reveals that dust is emitted from the image forming apparatus even not at the time of the image formation. In a case where dust is only inhibited from being emitted, the dust emission can be inhibited by keeping the rotation of the fan even not at the time of the image formation. However, in this case, a noise problem may occur, i.e., the sound of the fan is noisy.

### SUMMARY OF INVENTION

To solve such problem, there is provided an image forming apparatus, comprising: an image forming device that forms a toner image on a sheet; a fixing device that fixes the toner image on the sheet by heating the sheet on which the toner image is formed by the image forming device; a case that houses the image forming device and the fixing device; a first fan that generates a first airflow flowing in a predetermined direction in the case; and a controller configured to control a heating temperature of the fixing device to a temperature corresponding to an operation mode of the image forming apparatus and control a rotation speed of the first fan corresponding to the operation mode of the image forming apparatus.

Preferably, the first airflow flows dust generated in the fixing device toward the first fan.

Preferably still, the controller is configured to stop the rotation of the first fan when the heating temperature of the fixing device is a temperature where an amount of the dust generated in the fixing device is equal to or lower than a predetermined amount.

Preferably yet, the image forming apparatus further comprises: a second fan that generates a second airflow, the second airflow inhibiting the first airflow from flowing in a direction other than a direction in the first fan, wherein the controller is configured to control a rotation speed of the second fan corresponding to the operation mode of the image forming apparatus.

Suitably, the image forming apparatus further comprises: an auxiliary storage device that stores a current mode information and mode setting information table, wherein the current mode information shows a current operation mode of the image forming apparatus, the mode setting information table includes a record showing a relationship among the operation mode of the image forming apparatus, the rotation speeds of the first and second fans, and the heating temperature of the fixing device for each of the operation mode, and the controller is configured to control the rotation speeds of the first and second fans and the heating temperature of the fixing device with reference to the current mode information and the mode setting information table stored in the auxiliary storage device.

Suitably still, the operation mode of the image forming apparatus includes an image formation mode and a standby mode, the image formation mode being an operation mode where an image is formed, the standby mode being an operation mode where power consumption is lower than that of the image formation mode, the controller is configured to: when the operation mode of the image forming apparatus is the image formation mode, control the rotation speeds of the first and second fans to a high speed, and control the heating temperature of the fixing device to a predetermined high temperature; and when the operation mode of the image forming apparatus is the standby mode, control the rotation speed of the first fan to a low speed lower than the high speed or stop the first fan, control the rotation speed of the second fan to the lower speed, and control the heating temperature of the fixing device to the high temperature or a low temperature lower than the high temperature.

The present invention also relates to an image forming method, comprising: forming a toner image on a sheet by an image forming device; heating by a fixing device the sheet on which the toner image is formed to fix the toner image on the sheet; generating a first airflow flowing in a predetermined direction by a first fan in a case that houses the image forming device and the fixing device; controlling a heating temperature of the fixing device to a temperature corresponding to an operation mode of the image forming apparatus; and controlling a rotation speed of the first fan to a rotation speed corresponding to the operation mode of the image forming apparatus.

Preferably, the first airflow flows dust generated in the fixing device toward the first fan.

Preferably still, in controlling the rotation of the first fan, the rotation of the first fan stops when the heating temperature of the fixing device is a temperature where an amount of the dust generated in the fixing device is lower than a predetermined amount.

Preferably yet, the image forming method further comprises: generating a second airflow inhibiting the first airflow from flowing in a direction other than a direction in the first fan by a second fan; and controlling a rotation speed of the second fan corresponding to the operation mode of the image forming apparatus.

The present invention also concerns a non-transitory computer readable medium storing a program causing a computer to execute the method described above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is an outer appearance view showing a schematic of an image forming apparatus according to an embodiment.
Fig. 2 is a cross sectional view showing a specific example of the image forming apparatus according to the embodiment.
Fig. 3 is a cross sectional view showing a specific example of a printing device according to the embodiment.
Fig. 4 is a cross sectional view showing a specific example of an exhaust duct viewed from a top surface according to the embodiment.
Fig. 5 is a view showing a specific example of a functional structure of the image forming apparatus according to the embodiment.
Fig.6 is a diagram showing a specific example of mode setting information according to the embodiment.
Fig.7 is a diagram showing a specific example of shift condition information according to the embodiment.
Fig.8 is a diagram showing a specific example of a functional structure of a controller according to the embodiment.
Fig. 9 is a flowchart showing specific processing that the controller according to the embodiment controls rotation speeds of an air blow fan and an air suction fan and a temperature of a fixing device.
Fig. 10 is a drawing showing a specific example of a shift of an operation mode of the image forming apparatus according to the embodiment.
Fig. 11 is a graph showing a first experimental result showing a relationship between an operation of the image forming apparatus according to the embodiment and a dust emission amount.
Fig. 12 is a graph showing a second experimental result showing a relationship between an operation of the image forming apparatus according to the embodiment and a dust emission amount.
Fig. 13 is a graph showing an experimental result showing a relationship between the operation of the image forming apparatus according to the embodiment and a temperature of a cleaner of photosensitive body.
Fig. 14 is a graph showing an experimental result showing a relationship between the operation of the image forming apparatus according to the embodiment and a sound pressure on an upper surface of a touch panel.
Fig. 15 is a diagram that summarizes the experimental result of Fig. 13 and the experimental result of Fig. 14.

### DETAILED DESCRIPTION

According to one embodiment, an image forming apparatus includes an image forming device, a fixing device, a case, a first fan, and a controller. The image forming device forms a toner image on a sheet. The fixing device fixes the toner image on the sheet by heating the sheet on which the toner image is formed by the image forming device. The case houses the image forming device and the fixing device. The first fan generates a first airflow flowing in a predetermined direction in the case. The controller controls a heating temperature of the fixing device to a temperature corresponding to an operation mode of the image forming apparatus. Furthermore, the controller controls a rotation speed of the first fan corresponding to the operation mode of the image forming apparatus.

Hereinafter, an image forming apparatus and an image forming method according to an embodiment will be described with reference to the drawings. In the drawings, the same reference symbols represent the same or similar units.

### (First embodiment)

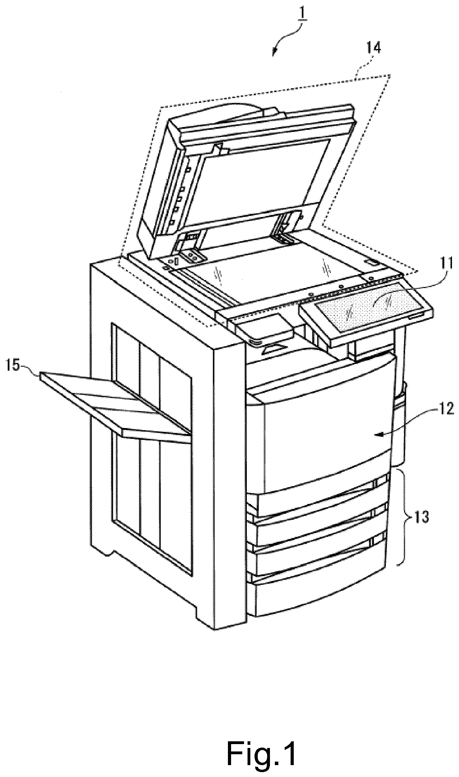

Fig. 1 is an outer appearance view showing a schematic of an image forming apparatus 1 according to an embodiment. The image forming apparatus 1 is, for example, a multifunctional machine. The image forming apparatus 1 includes a touch panel 11, a printing device 12, a sheet housing device 13, an image reading device 14, and a sheet ejecting device 15. Note that the printing device 12 of the image forming apparatus 1 may be an electrophotographic apparatus for fixing a toner image or an inkjet apparatus.

The image forming apparatus 1 uses a developer including toner or the like to form an image on a sheet. The sheet is, for example, paper or label paper. The sheet only needs to be a medium on which the image forming apparatus 1 is capable of forming images on the surface thereof.

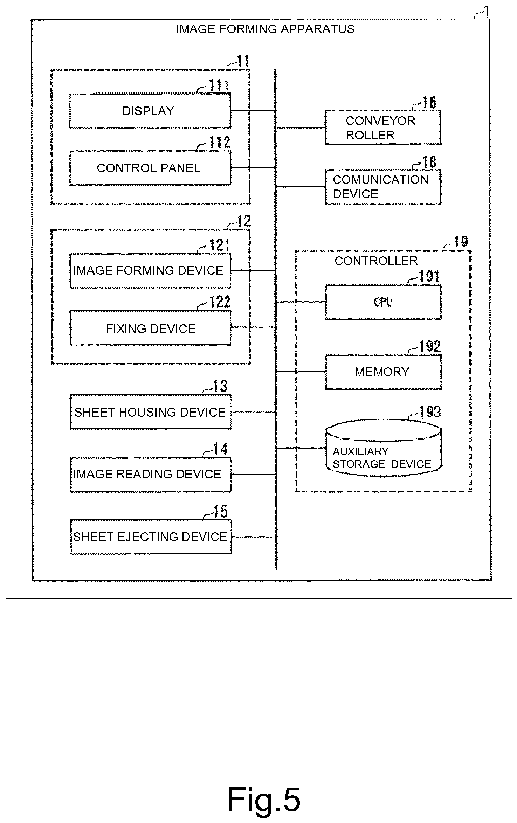

The touch panel 11 shown in Fig. 1 includes a display 111 (see Fig. 5) and a control panel 112 (see Fig. 5). The display 111 is an image display device such as a liquid crystal display of an organic electro luminescence (EL) display. The display 111 displays various types of information regarding the image forming apparatus 1. Specifically, the display 111 displays an image showing a shiftable operation mode of the image forming apparatus 1.

The control panel 112 includes a plurality of buttons. The control panel 112 receives an operation of a user. The control panel 112 receives a user's selection of the image showing the operation mode displayed on the display 111. In other words, the user can select a desired operation mode from the operation modes shown by the image by selecting the image displayed on the display 111 via the control panel 112. The control panel 112 inputs information corresponding to a user's operation to the image forming apparatus 1. Specifically, the control panel 112 inputs shift instruction information to the image forming apparatus 1 by the user's operation. The shift instruction information is information showing a shift instruction to the operation mode selected by the user from the shiftable operation mode of the image forming apparatus 1.

The operation mode of the image forming apparatus 1 includes, specifically, an image formation mode, a first standby mode, a second standby mode, or a stop mode. The image formation mode is an operation mode that the image forming apparatus 1 forms an image, and power consumption is greatest. The first standby mode is an operation mode that the power consumption by the image forming apparatus 1 is lower than that of the image formation mode. The second standby mode is an operation mode that the power consumption by the image forming apparatus 1 is even lower than that of the first standby mode. The stop mode is an operation mode that the power consumption by the image forming apparatus 1 is even lower than that of the second standby mode.

Note that all operation modes are not necessarily selectable by the user all the time. For example, the user may select the image formation mode only when the image forming apparatus 1 is in the first standby mode or the second standby mode. In addition, the second standby mode may be the operation mode selectable by the user. Hereinafter, to simplify the description, it assumes that the user can select the image formation mode only in the first standby mode or the second standby mode and cannot always select the second standby mode.

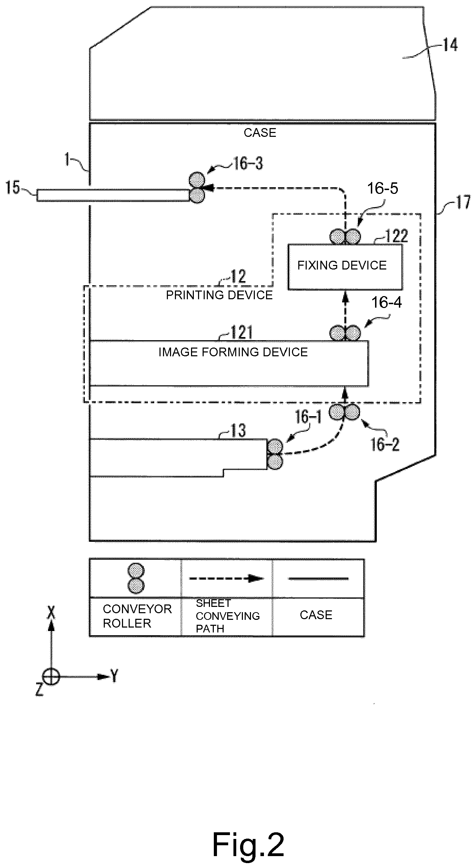

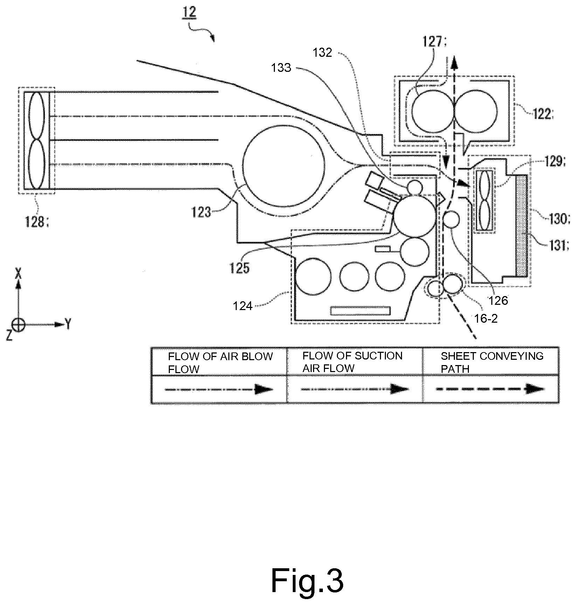

The printing device 12 prints the image on the sheet on the basis of image information generated by the image reading device 14 or image information received via a communication path. The printing device 12 prints the image by, for example, the following processing. An image forming device 121 (see Fig. 2) described later of the printing device 12 forms an electrostatic latent image on a photosensitive drum 125 (see Fig. 3) on the basis of the image information. The image forming device 121 of the printing device 12 forms a visible image on a photosensitive drum 125 by causing (developing) a developer to adhere to the electrostatic latent image. A specific example of the developer is toner. A transfer roller 126 (see Fig. 3) described later of the printing device 12 transfers the visible image (toner image) on the sheet from the photosensitive drum 125. A fixing device 122 of the printing device 12 applies heat and pressure on the sheet to fix the toner image on the sheet. Note that the sheet on which an image is to be formed may be a sheet housed in the sheet housing device 13 or may be a sheet that is manually fed.

The sheet housing device 13 houses sheets to be used for printing an image (hereinafter referred to as "image printing") in the printing device 12.

The image reading device 14 reads image information of an original sheet to be read, as brightness and darkness of light. The image reading device 14 stores the read image information. The stored image information may be transmitted to another information processing apparatus via a network. The stored image information may be printed on the sheet by the printing device 12.

The sheet ejecting device 15 ejects the sheet on which the image printing is performed by the printing device 12. The sheet ejecting device 15 includes a tray on which sheets are loaded.

Fig. 2 is a view showing a specific example of a cross section of the image forming apparatus 1 according to the embodiment. The image forming apparatus 1 of the embodiment includes a plurality of conveyor rollers 16-N (N is an integer from 1 to 5) and a case 17 in addition to the printing device 12, the sheet housing device 13, the image reading device 14, and the sheet ejecting device 15 as described above. The printing device 12 includes the image forming device 121 and the fixing device 122 as shown in Fig. 2. The image forming device 121 forms the toner image on the photosensitive drum 12 on the basis of the image information generated by the image reading device 14 or the image information received via the communication path. The image forming device 121 transfers the toner image from the photosensitive drum 12 to the sheet by the transfer roller 126.

The plurality of convayor rollers 16-N (N is an integer from 1 to 5) convey the sheets. Specifically, each conveyor roller 16-N includes a pair of rollers, for example, of a drive roller and a driven roller. The conveyor roller 16-N pinches the sheet between the pair of the drive roller and the driven roller. The conveyor roller 16-N conveys the sheet by rotating the drive roller and the driven roller. Hereinafter, in a case where respective conveyor rollers of the conveyor rollers 16-N are not distinguished, the conveyor rollers 16-N are referred to as a conveyor device 16. The conveyor rollers 16-1 and 16-2 conveys the sheet housed in the sheet housing device 13 to a position of the transfer roller 126. The conveyor roller 16-4 conveys the sheet from the position of the transfer roller 126 to the fixing device 122. The conveyor rollers 16-3 and 16-3 convey the sheet from the fixing device 122 to the sheet ejecting device 15.

The case 17 encloses the printing device 12, the sheet housing device 13, and the conveyor device 16 to house the respective devices. The case 17 prevents air an inside of the case from leaking to an outside of the case. Note that the inside of the case is a space inside an enclosure of the case 17 and includes the printing device 12, the sheet housing device 13, and the plurality of conveyor rollers 16-N. The outside of the case is a space opposite to the inside of the case across a boundary of the case 17.

Fig. 3 is a view showing a specific example of a cross section of the printing device 12 in the embodiment. The above-described image forming device 121 of the printing device 12 includes a toner cartridge 123, an image forming unit 124, a photosensitive drum 125, a transfer roller 126, and a cleaner of photosensitive body 133 shown in Fig. 3. In addition, the above-described fixing device 122 of the printing device 12 includes a fixing roller 127 shown in Fig. 3. Furthermore, the printing device 12 includes an air blow fan 128, an air suction fan 129, an exhaust duct 130, an exhaust port 131, and a cooling duct 132. Hereinafter, to simplify the description, right-handed XYZ orthogonal coordinates are used for description. The X axis direction substantially equals to the direction where the sheet is conveyed to the fixing device 122 passing through the conveyor roller 16-2 and the position at the transfer roller 126 of the image forming unit 121. The X axis positive direction is the direction where the sheet is conveyed to the fixing device 122 passing through the conveyor roller 16-2 and the position at the transfer roller 126 of the image forming unit 121. The Z axis direction is the direction orthogonal to a plane of paper. The Z axis positive direction is the direction directed from a front of the plane of paper to a back of the plane of paper. The Y axis direction is orthogonal to the X axis and the Z axis.

The toner cartridge 123 feeds toner with which the image forming apparatus 1 forms an image. The image forming unit 124 forms a toner image. Specifically, the image forming unit 124 forms a toner image on the surface of the photosensitive drum 125. On the photosensitive drum 125, an electrostatic latent image is formed. The photosensitive drum 125 is an image carrier and is a columnar drum, for example. The photosensitive drum 125 includes a photosensitive material on an outer periphery and has a property that a potential of a light irradiated part is attenuated. The surface of the photosensitive drum 125 is uniformly charged at a predetermined potential by a charger and an electrostatic latent image is formed by an exposure apparatus. The charger is a needle electrode, for example. The exposure apparatus is a laser irradiation apparatus, for example. The electrostatic latent image formed on the surface of the photosensitive drum 125 is developed by using toner with a developing apparatus. The image developed by using the toner with the developing apparatus is the toner image.

The transfer roller 126 transfers the toner image formed on the surface of the photosensitive drum 125 to the sheet. The fixing roller 127 fixes the toner image transferred to the sheet by heat and pressure on the sheet. The air blow fan 128 generates an airflow toward inside the printing device 12, i.e., airflow toward the Y axis positive direction (hereinafter referred to as "air blow flow"). The air blow flow generated by the air blow fan 128 flows toward the air suction fan 129. The air suction fan 129 generates an airflow flowing from inside the fixing device 122 toward the air suction fan 129 (hereinafter referred to as "suction airflow"). Since the suction airflow flows from inside the fixing device 122 toward the air suction fan 129, the suction air is heated by the fixing device 122 and the suction airflow includes dust generated from the fixing device 122. The air suction fan 129 sucks the suction airflow. The air suction fan 129 is present at an opposite side of the air blow fan 128 in the Y axis direction across the toner cartridge 123. The air suction fan 129 sucks the suction airflow and the air blow flow. The exhaust duct 130 flows the air sucked by the air suction fan 129 toward the exhaust port 131. The exhaust port 131 exhausts the air sucked by the air suction fan 129. The cooling duct 132 is positioned on the way of the air blow flow flowing from the air blow fan 128 to the air suction fan 129 and lowers the temperature of the air blow flow. The cooling duct 132 is positioned at a positive side of the Y axis from the toner cartridge 123 and at a negative side of the Y axis from the air suction fan 129 and fixing device 122. The cleaner of photosensitive body 133 removes residual toner of the photosensitive drum 125. Note that the image forming apparatus 1 shown in Fig. 3 has a specific structure that an image is formed by single color toner. However, the image forming apparatus 1 may have a structure that an image is formed by multicolor toner. Specifically, the image forming apparatus 1 may include, for example, a plurality of image forming units, a primary transfer belt, a secondary transfer roller, and the like in order to form an image using the multicolor toner. In Fig. 3, the fixing device 122 is positioned at a positive side of the X axis from the air suction fan 129 and the cooling duct 132. Thus, in the printing device 12 where each functional unit is arranged, the air blow flow flows toward the positive direction of the Y axis. Accordingly, the air blow flow inhibits the suction airflow including dust from directing toward the direction other than the direction toward the air suction fan 129. Specifically, the air blow flow inhibits the suction airflow including dust from flowing to the direction of the toner cartridge 123 through the cooling duct.

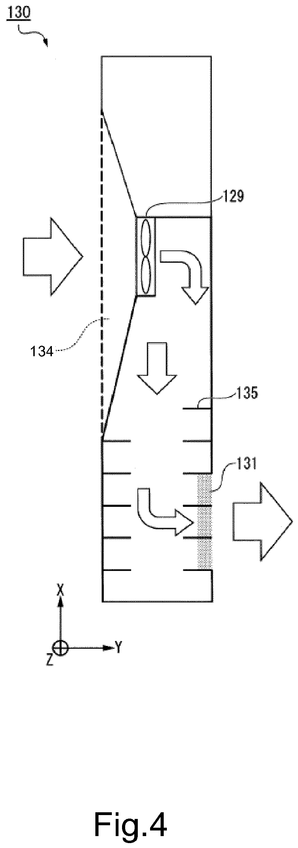

Fig. 4 is a view showing a specific example of a cross section viewed from a top surface of the exhaust duct 130 in the embodiment. The exhaust duct 130 includes the air suction fan 129, the exhaust port 131, a rib for sheet conveyance 134, and a convex plate 135. The rib for sheet conveyance 134 prevents the sheet from sticking to the air suction fan 129. The convex plate 135 adsorbs dust included in the air stuck by the air suction fan 129 and decreases an amount of the dust exhausted from the exhaust port.

Fig. 5 is a view showing a specific example of a functional structure of the image forming apparatus 1 in the embodiment. The image forming apparatus 1 include a controller 19. The controller 19 includes a CPU (Central Processing Unit) 191, a memory 192, an auxiliary storage device 193, and the like. The CPU (Central Processing Unit) 191, the memory 192, and the auxiliary storage device 193 are connected via a bus. The CPU 191 of the controller 19 executes a program stored in the memory 192 and the auxiliary storage device 193. By executing the program by the CPU 191 of the controller 19, the image forming apparatus 1 including the touch panel 11, the printing device 12, the sheet housing device 13, the image reading device 14, the sheet ejecting device 15, the conveyor roller 16, and a communication device 18 realizes functions. In other words, the CPU 191 of the controller 19 executes the program stored in the memory 192 and the auxiliary storage device 193, to thereby controlling each unit of the image forming apparatus 1. The communication device 18 includes a communication interface for connecting to an external device. The communication device 18 communicates with the external device via the communication interface.

The auxiliary storage device 193 includes a storage device such as a magnetic hard disc device or a semiconductor storage device. The auxiliary storage device 193 stores mode setting information, current mode information, and shift condition information. The mode setting information shows a relationship among the operation mode of the image forming apparatus 1, the rotation speeds of the air blow fan 128 and the air suction fan 129, and the temperature of the fixing device 122. The current mode information shows a current operation mode of the image forming apparatus 1. The shift condition information shows a relationship between conditions that the image forming apparatus 1 shifts from the current operation mode (operation mode shown by current mode information) and the operation mode of the shift destination in a case where no shift instruction information is present.

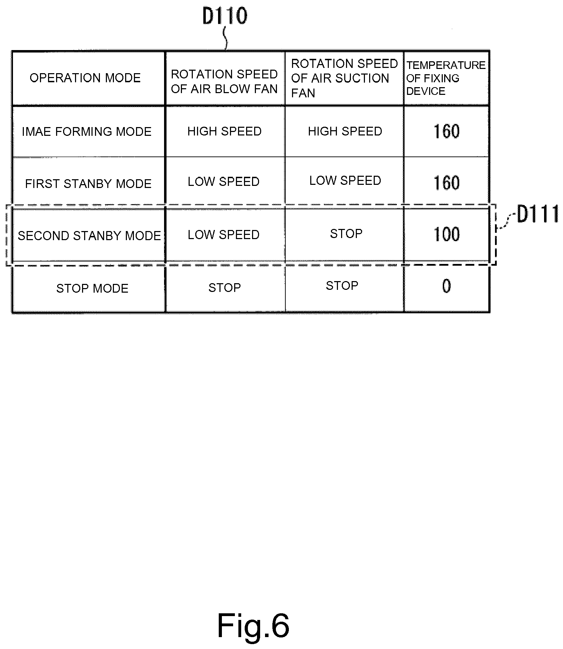

Fig. 6 is a diagram showing a specific example of the mode setting information. The mode setting information is stored in the auxiliary storage device 193 as a mode setting information table D110, for example. The mode setting information table D110 includes a record for each "operation mode". Each record includes each value of the "operation mode", the "rotation speed of air blow fan", the "rotation speed of air suction fan, and the "fixing device temperature".

The "operation mode" represents the operation mode of the image forming apparatus 1. The "operation mode" includes values of representing the "image formation mode", the "first standby mode", the "second standby mode", and the "stop mode". The "image formation mode" represents the image formation mode of the image forming apparatus 1. The "first standby mode" represents the first standby mode of the image forming apparatus 1. The "second standby mode" represents the second standby mode of the image forming apparatus 1. The "stop mode" represents the stop mode of the image forming apparatus 1.

The "rotation speed of air blow fan" represents the rotation speed of the air blow fan 128. The "rotation speed of air blow fan " has values representing "high speed", "low speed", and "stop". The "high speed" represents a predetermined rotation speed. The "low speed" represents a predetermined rotation speed lower than the rotation speed of the "high speed". The "stop" represents a rotation speed of 0, i.e., that the air blow fan 128 does not rotate.

The "rotation speed of air suction fan" represents the rotation speed of the air suction fan 129. The "rotation speed of air suction fan" has values representing "high speed", "low speed", and "stop". The "high speed" represents a predetermined rotation speed. The "low speed" represents a predetermined rotation speed lower than the rotation speed of the "high speed". The "stop" represents a rotation speed of 0, i.e., that the air suction fan 129 does not rotate.

The "fixing device temperature" represents the temperature of the fixing device 122. The "fixing device temperature" has values representing "160 (high temperature)", "100 (low temperature)", and "0". The "160" represents that the temperature of the fixing device 122 is 160 degrees. The "100" represents that the temperature of the fixing device 122 is 100 degrees. The "0" represents that the temperature of the fixing device 122 is 0 degrees.

For example, the record Dill represents that the air blow fan 128 rotates at a lower speed, the air suction fan 129 stops, and the temperature of the fixing device 122 is 100 degrees when the operation mode is the second standby mode.

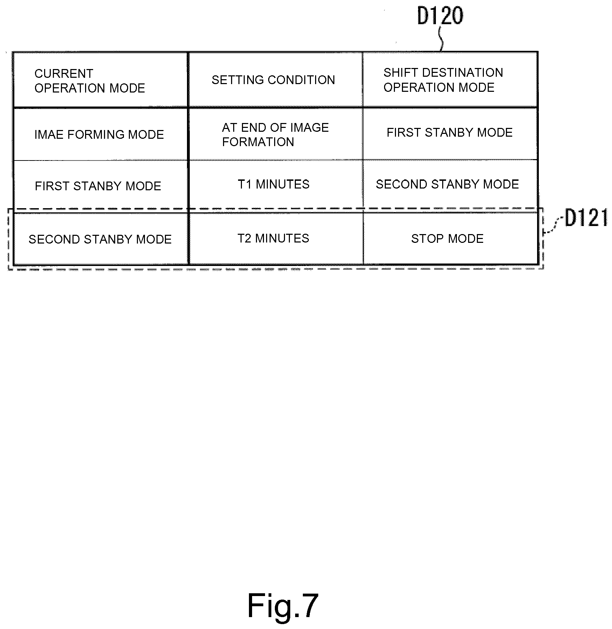

Fig. 7 is a diagram showing a specific example of shift condition information in the embodiment. The shift condition information is stored in the auxiliary storage device 193 as a shift condition information table D120, for example. The shift condition information table D120 has a record for each "current operation mode". Each record has each value of the "current operation mode", a "setting condition", and a "shift destination operation mode".

The "current operation mode" represents the operation mode shown by the current mode information stored in the auxiliary storage device 193. The "current operation mode" has values representing the "image formation mode", the "first standby mode", and the "second standby mode". The "image formation mode" represents that the operation mode shown by the current mode information stored in the auxiliary storage device 193 is the image formation mode. The "first standby mode" represents that the operation mode shown by the current mode information stored in the auxiliary storage device 193 is the first standby mode. The "second standby mode" represents that the operation mode shown by the current mode information stored in the auxiliary storage device 193 is the second standby mode.

The "setting condition" represents the condition that the operation mode of the image forming apparatus 1 is shifted from the current operation mode (operation mode shown by current mode information) to another operation mode when no shift instruction information is inputted. The "setting condition" includes values representing "at the end of image formation", "T1 minutes", and "T2 minutes". The "at the end of image formation" represents that the operation mode of the image forming apparatus 1 is shifted from the current operation mode to a predetermined operation mode at the time when the image formation is ended by the image forming apparatus 1. The phrase of "at the time when the image formation is ended" means that a predetermined time elapses after the information of instructing the image formation is inputted, for example. The "T1 minutes" represent that the operation mode of the image forming apparatus 1 is shifted from the current operation mode to a predetermined operation mode after the T1 minutes when the image forming apparatus 1 becomes a first standby state. The "T2 minutes" represent that the operation mode of the image forming apparatus 1 is shifted from the current operation mode to a predetermined operation mode after the T2 minutes when the image forming apparatus 1 becomes a second standby state. The "shift destination operation mode" represents the operation mode of the shift destination of the image forming apparatus 1. The "shift destination operation mode" has values representing the "first standby mode", the "second standby mode", and the "stop mode". The "first standby mode" represents the first standby mode of the image forming apparatus 1. The "second standby mode" represents the second standby mode of the image forming apparatus 1. The "stop mode" represents the stop mode of the image forming apparatus 1.

For example, a record D121 represents that the image forming apparatus 1 is shifted from the second standby mode to the stop mode in a case where no shift instruction information is inputted for the T2 minutes after the image forming apparatus 1 is shifted to the second standby mode.

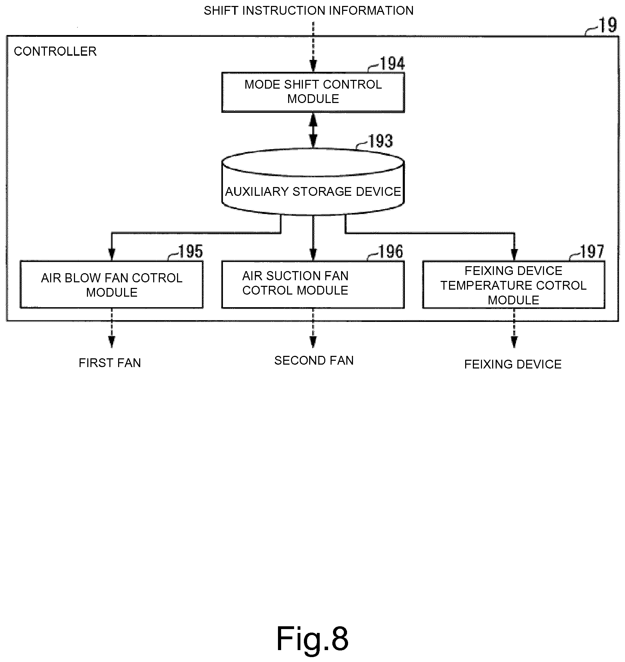

Fig. 8 is a diagram showing a specific example of a functional structure of the controller 19 in the embodiment. Fig. 8 shows the specific example of the functional structure about control of the air blow fan 128 by the controller 19, control of the air suction fan 129, and control of the temperature of the fixing device 122 in the embodiment. The controller 19 executes control of the image forming apparatus 1 by functional modules (not shown) other than the control of the air blow fan 128, the control of the air suction fan 129, and control of the temperature of the fixing device 122. The controller 19 functions as a mode shift control module 194, an air blow fan control module 195, an air suction fan control module 196, and a fixing device temperature control module 197 to execute shift control of the operation mode of the image forming apparatus 1, the control of the air blow fan 128, the control of the air suction fan 129, and the control of the temperature of the fixing device 122.

The mode shift control module 194 controls the shift of the operation mode of the image forming apparatus 1 on the basis of the shift condition information, the current mode information, and the shift instruction information. Controlling the shift of the operation mode specifically means that the value of the current mode information stored in the auxiliary storage device 193 is rewritten on the basis of the shift condition information and the shift instruction information. The mode shift control module 194 determines whether or not the shift instruction information is inputted to the image forming apparatus 1 for a predetermined period. The mode shift control module 194 rewrites the value of the current mode information on the basis of the shift condition information and the shift instruction information for every determination.

Specifically, the mode shift control module 194 overwrites the value of the current mode information with the value representing the operation mode of the shift destination shown by the shift instruction information in a case where the shift instruction information is acquired. The mode shift control module 194 rewrites the value of the current mode information on the basis of the current mode information and the shift condition information stored in the auxiliary storage device 193 in a case where no shift instruction information is present.

The air blow fan control module 195 controls the rotation speed of the air blow fan 128 on the basis of the current mode information and the mode setting information stored in the auxiliary storage device 193. The air blow fan control module 195 refers to the current mode information and the mode setting information stored in the auxiliary storage device 193 for a predetermined period.

The air suction fan control module 196 controls the rotation speed of the air suction fan 129 on the basis of the current mode information and the mode setting information stored in the auxiliary storage device 193. The air suction fan control module 196 refers to the current mode information and the mode setting information stored in the auxiliary storage device 193 for a predetermined period.

The fixing device temperature control module 197 controls the temperature of the fixing device 122 on the basis of the current mode information and the mode setting information stored in the auxiliary storage device 193. The fixing device 122 refers to the current mode information and the mode setting information stored in the auxiliary storage device 193 for a predetermined period.

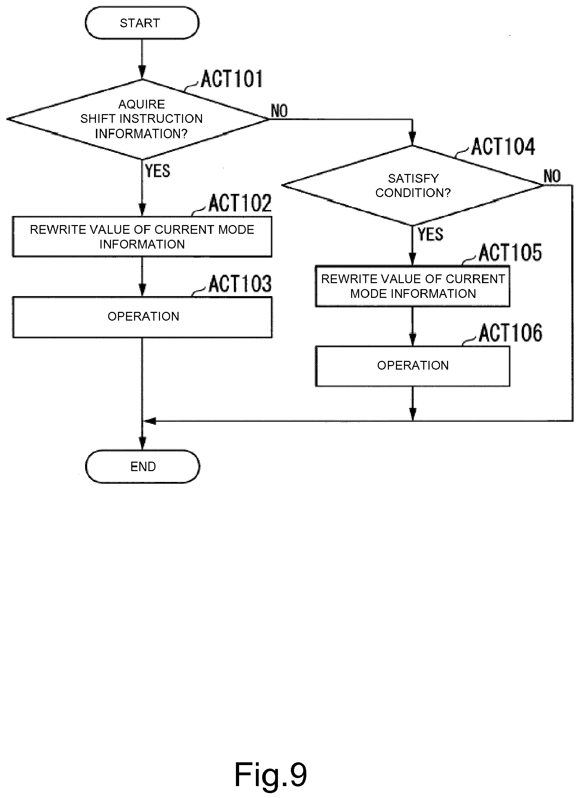

Fig. 9 is a flowchart showing specific processing that the controller 19 in the embodiment controls the rotation speed of the air blow fan 128, the rotation speed of the air suction fan 129, and the temperature of the fixing device 122. Note that, the processing in Fig. 9 is repeatedly executed while electric power is supplied to the image forming apparatus 1.

In ACT101 of Fig. 9, the mode shift control module 194 of the controller 19 determines whether or not the image forming apparatus 1 acquires the shift instruction information at a predetermined time. In a case where the mode shift control module 194 acquires the shift instruction information (ACT101: Yes), the processing of the controller 19 proceeds to ACT102. In ACT102, the mode shift control module 194 of the controller 19 overwrites the value of the current mode information of the auxiliary storage device 193 with the value representing the operation mode shown by the shift instruction information. After ACT102, the processing of the controller 19 proceeds to ACT103. In ACT103, the air blow fan control module 195, the air suction fan control module 196, and the fixing device temperature control module 197 of the controller 19 are operated on the basis of the current mode information and the mode setting information stored in the auxiliary storage device 193.

Specifically, the air blow fan control module 195 refers to the mode setting information table D110 stored in the auxiliary storage device 193 and selects a record that a value of an "operation mode" item represents an operation mode shown by the current mode information. The air blow fan control module 195 acquires a value of the "rotation speed of air blow fan" from the selected record. The air blow fan control module 195 rotates the air blow fan 128 at the rotation speed shown by the acquired value. The air suction fan control module 196 refers to the mode setting information table D110 stored in the auxiliary storage device 193 and selects the record that the value of the "operation mode" item represents an operation mode shown by the current mode information. The air suction fan control module 196 acquires a value of the "rotation speed of air suction fan" from the selected record. The air suction fan control module 196 rotates the air suction fan 129 at the rotation speed shown by the acquired value.

The fixing device temperature control module 197 refers to the mode setting information table D110 stored in the auxiliary storage device 193 and selects the record that the value of an "operation mode" item represents an operation mode shown by the current mode information. The fixing device temperature control module 197 acquires a value of the "fixing device temperature" from the selected record. The fixing device temperature control module 197 controls the fixing device 122 so that the temperature of the fixing device 122 is the temperature shown by the acquired value. Controlling the fixing device 122 specifically means that electric power supplied to a heater that heats the fixing device 122 is controlled.

Specifically, in a case where the operation mode shown by the current mode information is the second standby mode, for example, the air blow fan 128 rotates at a lower speed, the air suction fan 129 stops, and the temperature of the fixing device 122 is 100 degrees.

On the other hand, in ACT101, in a case where the mode shift control module 194 does not acquire the shift instruction information (ACT101: No), the processing of the controller 19 proceeds to ACT104. In ACT104, the mode shift control module 194 refers to the current mode information and the shift condition information stored in the auxiliary storage device 193. The mode shift control module 194 determines whether or not it shifts from the current operation mode to the operation mode specified by the shift condition information on the basis of the current mode information and the shift condition information. Specifically, the mode shift control module 194 refers to the shift condition information table D120 and selects a record that the "current operation mode" is the operation mode shown by the current mode information. The mode shift control module 194 acquires a value of the "setting condition" of the selected record. The mode shift control module 194 determines whether or not the condition shown by the acquired value is satisfied. In a case where the condition shown by the acquired value is satisfied (ACT104: Yes), the processing of the controller 19 proceeds to ACT105. In ACT105, the mode shift control module 194 acquires a value of the "shift destination operation mode" of the record selected in ACT103. The mode shift control module 194 overwrites the value of the current mode information stored in the auxiliary storage device 193 with the acquired value. After ACT105, in ACT106, the air blow fan control module 195, the air suction fan control module 196, and the fixing device temperature control module 197 are operated on the basis of the current mode information and the mode setting information stored in the auxiliary storage device 193.

Specifically, the air blow fan control module 195 refers to the mode setting information table D110 stored in the auxiliary storage device 193 and selects the record that the value of the "operation mode" represents the operation mode shown by the current mode information. The air blow fan control module 195 acquires the value of the "rotation speed of air blow fan" from the selected record. The air blow fan control module 195 rotates the air blow fan 128 at the rotation speed shown by the acquired value. The air suction fan control module 196 refers to the mode setting information table D110 stored in the auxiliary storage device 193 and selects the record that the value of the "operation mode" item represents the operation mode shown by the current mode information. The air suction fan control module 196 acquires the value of the "rotation speed of air suction fan" from the selected record. The air suction fan control module 196 rotates the air suction fan 129 at the rotation speed shown by the acquired value.

The fixing device temperature control module 197 refers to the mode setting information table D110 stored in the auxiliary storage device 193 and selects the record that the value of the "operation mode" item represents the operation mode shown by the current mode information. The fixing device temperature control module 197 acquires the value of the "fixing device temperature" from the selected record. The fixing device temperature control module 197 controls the fixing device 122 so that the temperature of the fixing device 122 is the temperature shown by the acquired value.

On the other hand, in ACT104, in a case where the condition shown by the acquired value is not satisfied (ACT104: No), the mode shift control module 194 ends the processing.

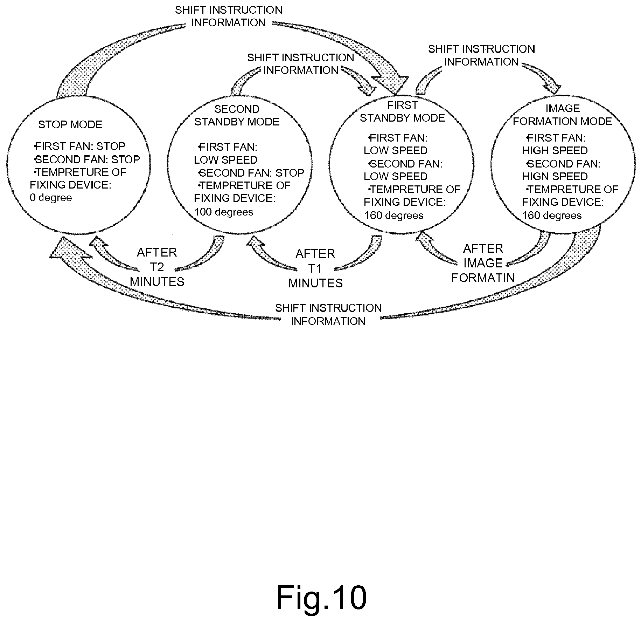

Fig. 10 is a drawing showing a specific example of the shift of the operation mode of the image forming apparatus 1 according to the embodiment. The image forming apparatus 1 in the stop mode shifts to the first standby mode when the shift instruction information is inputted. The image forming apparatus 1 in the second standby mode shifts to the first standby mode when the shift instruction information is inputted. The image forming apparatus 1 in the first standby mode shifts to the image formation mode when the instruction that shows the shift to the image formation mode as the shift instruction information is inputted. The image forming apparatus 1 in the image formation mode shifts to the first standby mode when the image formation is ended. The image forming apparatus 1 in the first standby mode shifts to the second standby mode when the T1 minutes elapse after it shifts to the first standby mode. The image forming apparatus 1 in the second standby mode shifts to the stop mode when the T2 minutes elapse after it shifts to the second standby mode. The image forming apparatus 1 in the image formation mode shifts to the stop mode when the shift instruction information showing the shift instruction to the stop mode is inputted. Note that the image forming apparatus 1 in the image formation mode may shift to the first standby mode if the shift instruction information showing the shift instruction to the first standby mode is inputted. Note that the shift instruction information showing the shift instruction to the image formation mode refers to the information that instructs the image forming apparatus 1 to form images.

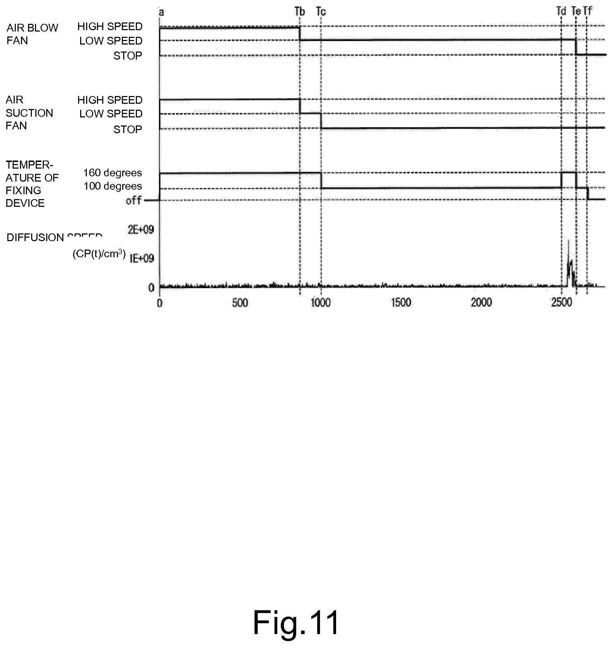

Fig. 11 is a graph showing a first experimental result showing a relationship between the operation of the image forming apparatus 1 in the embodiment and a dust emission amount. During the period from the time Ta to the time Tb of Fig. 11, the air blow fan 128 rotates at a high speed, the air suction fan 129 rotates at a high speed, and the temperature of the fixing device 122 is 160 degrees. In other words, during the period from the time Ta to the time Tb, the image forming apparatus 1 is in the image formation mode. During the period of Fig. 11, the dust emission amount substantially equals to 0.

During the period from the time Tb to the time Tc of Fig. 11, the air blow fan 128 rotates at a low speed, the air suction fan 129 rotates at a low speed, and the temperature of the fixing device 122 is 160 degrees. In other words, during the period from the time Tb to the time Tc, the image forming apparatus 1 is in the first standby mode. During the period of Fig. 11, the dust emission amount substantially equals to 0.

During the period from the time Tc to the time Td of Fig. 11, the air blow fan 128 rotates at a low speed, the air suction fan 129 stops, and the temperature of the fixing device 122 is 100 degrees. In other words, during the period from the time Tc to the time Td, the image forming apparatus 1 is in the second standby mode. During the period of Fig. 11, the dust emission amount substantially equals to 0.

During the period from the time Td to the time Te of Fig. 11, the air blow fan 128 rotates at a low speed, the air suction fan 129 stops, and the temperature of the fixing device 122 is 160 degrees. During the period of Fig. 11, the dust emission amount substantially equals to 2000000000 Cp(t)/cubic centimeters.

During the period from the time Td to the time Te of Fig. 11, the air blow fan 128 rotates at a low speed, the air suction fan 129 stops, and the temperature of the fixing device 122 is 160 degrees. During the period of Fig. 11, the dust emission amount substantially equals to 2000000000 Cp(t)/cubic centimeters.

During the period from the time Te to the time Tf of Fig. 11, the air blow fan 128 stops, the air suction fan 129 stops, and the temperature of the fixing device 122 is 100 degrees. During the period, i.e., the period from the time Td to the time Te, of Fig. 11, dust is removed and the dust emission amount therefore equals to 0.

The result during the period from the time Tc to the time Td and the result during the period from the time Td to the time Te of Fig. 11 show the following: When the temperature of the fixing device 122 is 100 degrees, no dust is emitted as long as only the air blow fan 128 rotates. When the temperature of the fixing device 122 is 160 degrees, no dust is emitted if the air suction fan 129 rotates together with the air blow fan 128. This means the following: In other words, when the generation amount of dust is equal to or lower than the predetermined amount, the dust amount emitted to outside the image forming apparatus 1 substantially equals to 0 even if the rotation of the air suction fan 129 stops. Also, Fig. 11 shows that dust is less generated from the fixing device 122 in the temperature of 100 degrees as compared with in the temperature of 160 degrees in the image forming apparatus 1 of the embodiment.

Thus, even if the rotation of the air suction fan 129 stops, the dust emission amount is reduced as long as the temperature of the fixing device 122 is 100 degrees.

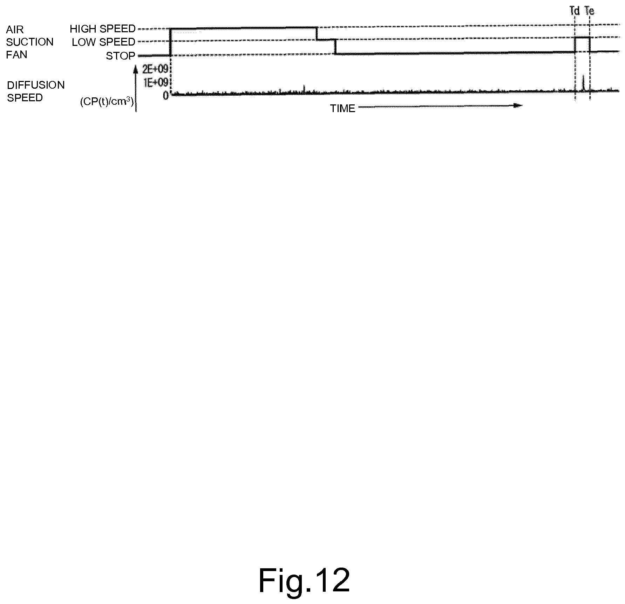

Fig. 12 is a graph showing a second experimental result showing a relationship between the operation of the image forming apparatus 1 in the embodiment and a dust emission amount. Fig. 12 shows the dust emission amount when the air suction fan 129 rotates at a low speed during the period from the time Td to the time Te of Fig. 11. During the period from the time Td to time Te of Fig. 12, the air blow fan 128 rotates at a low speed, the temperature of the fixing device 122 is 160 degrees, and the air suction fan 129 rotates at a low speed. In other words, during the period from the time Td to time Te of Fig. 12, the image forming apparatus 1 is in the first standby mode. In this case, dust emission amount substantially equals to 1000000000Cp(t)/cubic centimeters and is lower than the dust emission amount emitted during the period from the time Td to the time Te of Fig. 11.

Thus, when the temperature of the fixing device 122 is 160 degrees, the air suction fan 129 rotates at a low speed such that the dust emission amount can be reduced.

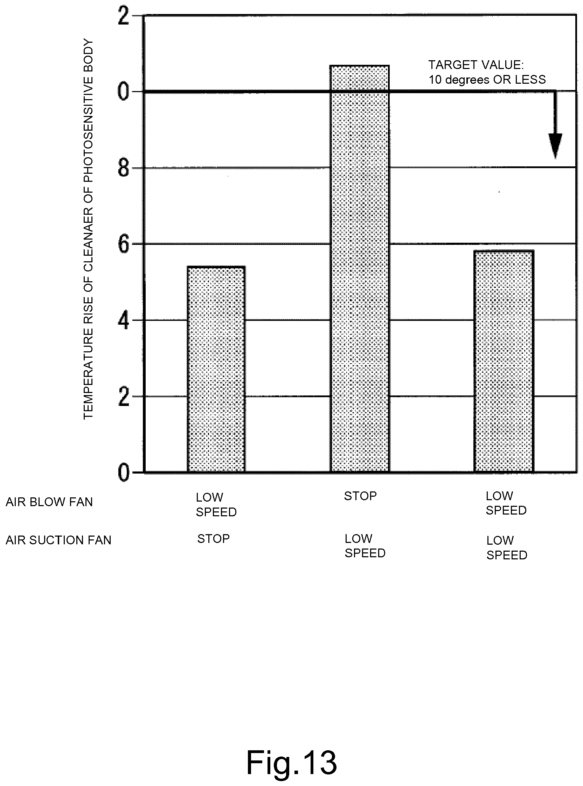

Fig. 13 is a graph showing an experimental result showing a relationship between the operation of the image forming apparatus 1 in the embodiment and the temperature of the cleaner of photosensitive body 133. Fig. 13 shows that rotating the air blow fan 128 reduces a temperature rise of the cleaner of photosensitive body 133.

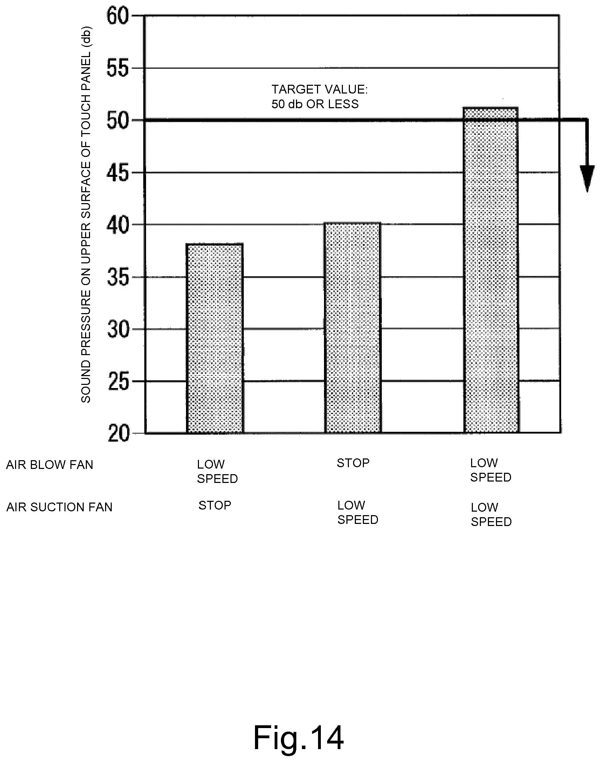

Fig. 14 is a graph showing an experimental result showing a relationship between the operation of the image forming apparatus 1 in the embodiment and a sound pressure on an upper surface of the touch panel 11. Fig. 14 shows that the sound pressure provided when the air blow fan 128 and the air suction fan 129 rotate is higher than any of the sound pressure provided when only the air blow fan 128 rotates and the sound pressure provided when only the air suction fan 129 rotates. Fig. 14 shows that the sound pressure provided when only the air blow fan 128 rotates is higher than the sound pressure provided when only the air suction fan 129 rotates. Thus, Fig. 14 shows that noise generation is effectively inhibited by stopping the rotation of the air suction fan 129 as compared with by stopping the rotation of the air blow fan 128.

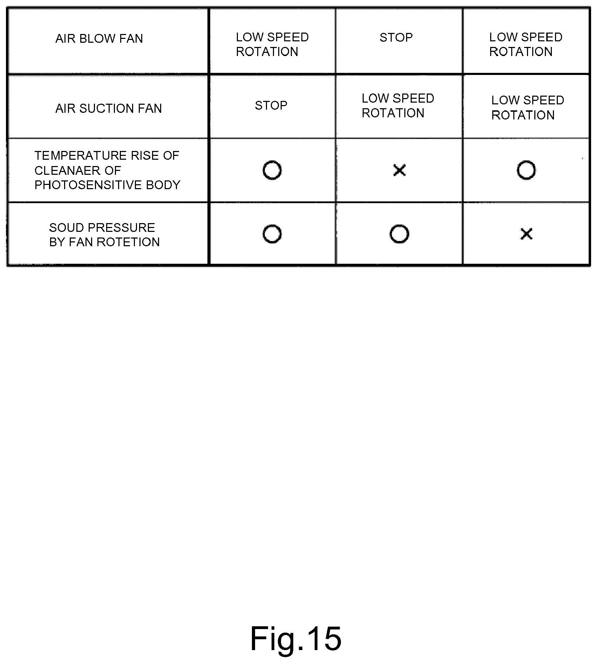

Fig. 15 is a diagram that summarizes the result of Fig. 13 and the result of Fig. 14. In Fig. 15, circle marks represent the state that the user desires. In Fig. 15, cross marks represents the state that the user does not desire. In a case where the air blow fan 128 rotates at a low speed and the air suction fan 129 stops, an increase in the temperature of the cleaner of photosensitive body 133 is low, which is the state that the user desires. In this case, as the sound pressure is also low, the state is that the user desires. In a case where the air blow fan 128 does not rotate and the air suction fan 129 rotates at a low speed, an increase in the temperature of the cleaner of photosensitive body 133 is high. As to the increase in the temperature, the state is that the user does not desire. On the other hand, in this case, the sound pressure is low. As to the sound pressure, the state is that the user desires. In a case where the air blow fan 128 rotates at a low speed and the air suction fan 129 rotates at a low speed, an increase of the temperature of the cleaner of photosensitive body 133 is low. As to the increase in the temperature, the state is that the user desires. On the other hand, in this case, the sound pressure is high. As to the sound pressure, the state is that the user does not desire.

The image forming apparatus 1 configured as described above has the mode shift control module 194 that controls the shift to the second standby mode. Therefore, even if the rotation of the air suction fan 129 stops, dust is inhibited from generating. Accordingly, it is possible both to inhibit the emission of duct outside the image forming apparatus and to further decrease noise.

Note that the shift instruction information that shows the instruction to shift from the stop mode to the first standby mode is not necessarily inputted by the user. For example, in a case where the image forming apparatus 1 includes a motion sensor, the shift instruction information may be a signal outputted when the motion sensor detects the user.

Note that the image forming apparatus 1 not necessarily includes the two fans (i.e., the air blow fan 128 and the air suction fan 129). The image forming apparatus 1 may include only the air suction fan 129.

Note that the arrangement of the air blow fan 128 or the air suction fan 129 is not necessarily limited to the arrangement shown in Fig. 3. The arrangement of the air blow fan 128 or the air suction fan 129 may be any arrangement that can generate airflow for collecting duct generated inside the image forming apparatus 1 at one place.

Note that the air blow fan 128 is an example of the second fan. Note that the air suction fan 129 is an example of the first fan. Note that the air blow flow is an example of the second airflow. Note that the suction airflow is an example of the first airflow. Note that the fixing device 122 is an example of a fixing unit. Note that the air blow fan control module 195 is an example of the second fan control module. Note that the air suction fan control module 196 is an example of the first fan control module.

Note that all or a part of respective functions of the image forming apparatus 1 may be realized by using hardware such as the ASIC (Application Specific Integrated Circuit) and the PLD (Programmable Logic Device) of the FPGA (Field Programmable Gate Array). The program may be recorded in a computer readable recording medium. The computer readable recording medium is a storage device such as a flexible disk, a magneto-optic disk, a portable medium such as a ROM and a CD-ROM, and a hard disk built in a computer system. The program may be transmitted via telecommunication line.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image forming apparatus, comprising:
an image forming device configured to form a toner image on a sheet;
a fixing device configured to fixe the toner image on the sheet by heating the sheet on which the toner image is formed by the image forming device;
a case configured to house the image forming device and the fixing device;
a first fan configured to generate a first airflow flowing in a predetermined direction in the case; and
a controller configured to control a heating temperature of the fixing device to a temperature corresponding to an operation mode of the image forming apparatus and control a rotation speed of the first fan corresponding to the operation mode of the image forming apparatus.

2. The image forming apparatus according to claim 1, wherein the first airflow is configured to flow dust generated in the fixing device toward the first fan.

3. The image forming apparatus according to claim 1 or 2, wherein the controller is configured to stop the rotation of the first fan when the heating temperature of the fixing device is a temperature where an amount of the dust generated in the fixing device is equal to or lower than a predetermined amount.

4. The image forming apparatus according to any one of claims 1 to 3, further comprising:
a second fan configured to generate a second airflow, the second airflow inhibiting the first airflow from flowing in a direction other than a direction in the first fan, wherein
the controller is configured to control a rotation speed of the second fan corresponding to the operation mode of the image forming apparatus.

5. The image forming apparatus according to claim 4, further comprising:
an auxiliary storage device configured to store a current mode information and mode setting information table, wherein
the current mode information shows a current operation mode of the image forming apparatus,
the mode setting information table includes a record showing a relationship among the operation mode of the image forming apparatus, the rotation speeds of the first and second fans, and the heating temperature of the fixing device for each of the operation mode, and
the controller is configured to control the rotation speeds of the first and second fans and the heating temperature of the fixing device with reference to the current mode information and the mode setting information table stored in the auxiliary storage device.

6. The image forming apparatus according to claim 5, wherein
the operation mode of the image forming apparatus includes an image formation mode and a standby mode,
the image formation mode being an operation mode where an image is formed,
the standby mode being an operation mode where power consumption is lower than that of the image formation mode,
the controller is configured to:
when the operation mode of the image forming apparatus is the image formation mode, control the rotation speeds of the first and second fans to a high speed, and control the heating temperature of the fixing device to a predetermined high temperature; and
when the operation mode of the image forming apparatus is the standby mode, control the rotation speed of the first fan to a low speed lower than the high speed or stop the first fan, control the rotation speed of the second fan to the lower speed, and control the heating temperature of the fixing device to the high temperature or a low temperature lower than the high temperature.

7. An image forming method, comprising:
forming a toner image on a sheet by an image forming device;
heating by a fixing device the sheet on which the toner image is formed to fix the toner image on the sheet;
generating a first airflow flowing in a predetermined direction by a first fan in a case that houses the image forming device and the fixing device;
controlling a heating temperature of the fixing device to a temperature corresponding to an operation mode of the image forming apparatus; and
controlling a rotation speed of the first fan to a rotation speed corresponding to the operation mode of the image forming apparatus.

8. The image forming method according to claim 7, wherein the first airflow flows dust generated in the fixing device toward the first fan.

9. The image forming method according to claim 7 or 8, wherein, in controlling the rotation of the first fan, the rotation of the first fan stops when the heating temperature of the fixing device is a temperature where an amount of the dust generated in the fixing device is lower than a predetermined amount.

10. The image forming method according to any one of claims 7 to 9, further comprising:
generating a second airflow inhibiting the first airflow from flowing in a direction other than a direction in the first fan by a second fan; and
controlling a rotation speed of the second fan corresponding to the operation mode of the image forming apparatus.

11. A non-transitory computer readable medium storing a program causing a computer to execute the method according to any one of claims 7 to 10.
